# EUROPEAN PATENT APPLICATION

(11) **EP 4 616 746 A1**
(43) Date of publication of application: **17.09.2025**
(21) Application number: 25163098.4
(22) Date of filing: 11.03.2025
(51) Int. Cl.: A43B 1/00, A43B 1/12, A43B 13/00, A43B 13/02, A43B 13/04, B29B 17/00, B29B 17/04, B29D 35/12, B29B 17/02, B29K 21/00, B29K 23/00, B29K 75/00, B29L 31/54

(54) **METHOD FOR MAKING SOLES FOR FOOTWEAR WITH RECYCLED MATERIAL**

(30) Priority: 12.03.2024 IT 202400005560
(71) Applicant: Return Societa' Benefit a Responsabilita' Limitata, 35129 Padova (IT)
(72) Inventor: GIAMPIERETTI, Marco, Padova (IT); BARBIERI, Giorgio, Padova (IT); ANCILOTTO, Pier Luigi, Padova (IT)
(74) Representative: Bruni, Alessandro

(57) **Abstract**

A method for the manufacture of shoe soles using recovered material comprises the steps of fragmenting exhausted tennis and/or padel balls, reducing them into fragments or granules of predetermined sizes, selecting those among said fragments that have a predetermined size, providing a compound, adding said fragments from said exhausted tennis and/or padel balls into said compound, mixing said compound containing said fragments from tennis and/or padel balls, molding at least one shoe sole in at least one mold, extracting said at least one shoe sole from said at least one mold.

## Description

The present invention relates to a method for manufacturing shoe soles that involves the use of recovered material from exhausted tennis or padel balls.

The term "exhausted" refers to used tennis and/or padel balls that exhibit such a performance degradation that they are deemed to be discarded.

Recent estimates indicate that over **400** million tennis and padel balls are consumed worldwide each year. Such a high consumption is driven by various factors, including the short lifespan of tennis or padel balls due to the loss of internal pressure and the rapid wear of their components, particularly the felt that covers their surface.

The deterioration of the outer felt layer varies depending on the conditions of use of the tennis or padel ball, including the characteristics of the playing surface, the type of rackets used, and the prevailing climatic conditions.

Hereinafter, reference will be made to tennis or padel balls, with the understanding that what is described can be applied interchangeably to both tennis and padel balls.

As is known, a tennis ball and a padel ball share numerous structural features differing mainly in their external dimensions and internal pressure.

**In** general, a tennis or padel ball is made from several non-biodegradable and non-compostable materials.

Specifically, a tennis ball (like a padel ball) consists of two rubber compounds, carbon black, sulfur, and other substances, which are bonded together through a vulcanization process, onto which two layers of felt - made from a mixed material of wool and synthetic fibers - are glued which, in turn, are necessary to improve grip by the racket and to increase air resistance, thereby enhancing ball control.

Due to the mixed composition and the strong bond between the inner and outer layers, recycling tennis or padel balls is challenging, resulting in several tons of waste material that must be disposed of in landfills or incinerators.

The waste generated by discarded tennis or padel balls represents a significant loss of high-quality raw materials, contributing to increased land consumption and the production of harmful environmental emissions.

In the field of shoe sole manufacturing, it is known to use inert or recycled materials to reduce the amount of raw materials required and to allow for the recovery of waste materials.

For example, it is common to use small fragments, generally no more than a few millimeters in size, such as 2-3mm pieces of cork, rubber fragments from used shoe soles, scrap tires, or even material from plastic bottles.

Documents US 11135796 B2 and US 2014/0217636 A1 disclose methods for manufacturing shoe soles using recycled materials, such as thermoplastic elastomers (TPE) or ethylene-vinyl acetate (EVA), which are integrated with the primary raw materials typically used in shoe sole production.

Typically, the amount of recycled material used in the production of shoe soles is modest, usually in the range of a few percentage points (e.g., 1%-3%), and therefore does not significantly reduce the amount of primary raw material required for shoe sole manufacturing.

Additionally, it should be noted that when the recycled material is of a type that does not mechanically and/or chemically bond with the components that make up a shoe sole - that is, an inert material - it can only be used in the form of extremely small fragments, as these fragments merely sink into the compound without adhering to it.

When such fragments reach the surface of the sole, or are positioned close to it, they can be easily removed, for example, by hand extraction.

As a result, a sole containing such fragments can easily experience fragment detachment when subjected to intense abrasion and mechanical flexing and/or torsional stress.

The detachment of these fragments creates discontinuities that can lead to cracks or breaks, compromising the performance of the sole itself and, consequently, of the shoe containing it, resulting in a rapid decline in its performance, with obvious repercussions on the amount of waste material that is produced and must be disposed of.

There is a recognized need in the industry to increase the amount of recycled material that can be added to the primary raw materials typically used in shoe sole manufacturing while still ensuring high performance for the sole.

In this context, it should be noted that the large number of exhausted tennis and padel balls represents a significant source of waste, the recycling of which would reduce the amount of waste to be disposed of, offering both environmental impact and cost advantages.

Additionally, tennis and padel balls are made from high-quality materials, meaning that the recycled material that can be obtained from them is also of high quality.

The purpose of the present invention is to provide a simple, efficient, and practical method for manufacturing shoe soles using recycled materials from tennis and/or padel balls.

Another objective of the present invention is to promote the recycling of the components of tennis and/or padel balls - that is, the rubber and felt - through a method that allows for the production of a sole whose technical characteristics, such as abrasion resistance, breaking strength, deformation at break, and total number of flex cycles, can meet specific usage requirements, whether for daily use or for amateur or professional sports.

A further objective of the present invention is to optimize the production costs of a shoe sole, allowing for the recovery of a large amount of recycled material, enabling the production of a high-performance sole at a lower cost compared to the traditional components used in shoe sole manufacturing.

The object of the invention is a method for manufacturing shoe soles that includes the steps of:
recovering exhausted tennis and/or padel balls, each comprising an external felt portion and an internal rubber portion;
crushing said exhausted tennis and/or padel balls, reducing them into fragments or granules of predetermined size;
separating rubber fragments from felt fragments obtained from said crushing step, wherein said separating includes at least one cycle of aeraulic separation;
pulverizing at least a portion of said rubber and/or felt fragments to further reduce the size of said fragments;
selecting those among said fragments that have a predetermined size;
providing a compound obtained from virgin raw materials;
adding said fragments from said exhausted tennis and/or padel balls to said compound;
mixing said compound containing said tennis and/or padel ball fragments;
forming at least one shoe sole in at least one mold;
extracting said at least one shoe sole from said at least one mold.

According to another aspect of the invention, the step of crushing the tennis and/or padel balls may include at least two crushing cycles, performed in succession, in which each of said crushing cycles involves cutting said tennis and/or padel balls into fragments of predetermined size.

According to a further aspect of the invention, the step of crushing the tennis and/or padel balls may include at least one cutting step in which the cutting is performed using a blade, water jet, and/or air jet.

According to an additional aspect of the invention, the aeraulic separation can be performed at the end of the crushing step or, if the crushing step includes more than one crushing phase, at the end of each of the crushing phases or at the end of all the crushing phases.

According to another aspect of the invention, the pulverizing step can allow for the production of fragments with sizes up to 100 µm.

According to a further aspect, the method for manufacturing shoe soles may include a devulcanization step for at least a portion of the rubber fragments obtained from the crushing step.

According to an additional aspect of the invention, the compound may be a rubber compound, and the mixing step may include adding to the rubber compound up to 50% by weight of recycled material obtained from devulcanized tennis and/or padel balls and up to 20% by weight of recycled material obtained from non-devulcanized or inert tennis and/or padel balls.

According to another aspect of the invention, the compound may be a rubber compound, and the mixing step may include adding up to 50% by weight of recycled material obtained from devulcanized tennis and/or padel balls.

According to a further aspect of the invention, the step of providing a compound may include providing an EVA or polyurethane compound.

According to an additional aspect of the invention, the step of adding tennis and/or padel ball fragments to the compound may include adding inert fragments that have not undergone a devulcanization process.

The advantages offered by the method for manufacturing shoe soles according to the invention are evident.

The method for manufacturing shoe soles according to the invention provides for the use of material from exhausted tennis and/or padel balls as a substitute, at least in part, for the virgin raw materials typically used in the footwear sole production industry.

It should be noted that the method for manufacturing shoe soles according to the invention allows for the use of a substantial amount of recycled material. This approach significantly reduces the amount of virgin raw material required, thereby limiting the negative effects and environmental impact.

Moreover, using a large amount of recycled material reduces production costs compared to traditional solutions, which, in contrast, do not involve the use of any recycled material.

The method for manufacturing shoe soles according to the invention allows for the production of soles with high mechanical performance, suitable for use in competitive sports. Alternatively, the method allows for the production of soles for amateur sports use or, again, for everyday use, thus providing an extremely versatile and flexible solution.

The present invention will now be described, by way of illustration and not limitation, according to its preferred embodiments.

This method for manufacturing shoe soles includes an initial step of sourcing recycled material from exhausted tennis and/or padel balls.

For illustrative, but not limiting, purposes, the sourcing may occur through a collection service for exhausted balls from sports clubs or dedicated collection points.

The balls thus collected are crushed to obtain small pieces, on the order of a few millimeters or less, as better described below.

The term "crushing" is used here in a general sense, referring to the application of one or more mechanical actions such as cutting, abrasion, or grinding, capable of reducing a tennis ball into granules or substantially into small granules or powder.

According to one embodiment, a mechanical machine capable of shredding tennis balls through a blade cutting action may be used, producing pieces of various sizes, preferably on the order of a few millimeters.

According to an alternative embodiment, the crushing step may include water jet cutting, air jet cutting, or a possible combination of water jet and/or air jet cutting with blade cutting.

According to one implementation of the method, the crushing step involves obtaining fragments with a maximum size of approximately ten millimeters. More specifically, the fragments may have a planar dimension, such as a square or substantially square shape, approximately 10mm per side and a thickness equal to that of the tennis ball, approximately 2-3mm.

It should be understood that the fragments may have a different planar shape than the square shape mentioned above, which is provided as a mere example, while still falling within the same inventive concept of the present method.

Regarding the crushing step, it should be noted that it may include one or more crushing cycles.

If multiple crushing cycles are performed, they are carried out in succession, gradually reducing the size of the resulting fragments.

For example, one version of the method according to the invention may involve obtaining fragments with dimensions ranging from approximately 1mm to 10mm after a first crushing cycle. After a second crushing cycle, following the first, fragments with dimensions ranging from approximately 1mm to 5mm may be obtained. After a third crushing cycle, fragments with dimensions ranging from approximately 1mm to 2mm may be obtained.

It should be understood that the above values may be reached with a different number of successive crushing cycles. For example, the 1mm to 2mm size range could be achieved after two crushing cycles.

At the end of the crushing phase, or at the end of each crushing cycle if more than one is performed, or again, at the end of all the crushing cycles, an aeraulic separation phase is provided, allowing for the complete or substantially complete separation of rubber fragments from felt fragments.

Aeraulic separation allows for optimal separation between rubber fragments and felt fragments.

If it is necessary to select fragments with a maximum size equal to a predetermined value, a sieving or screening process may be performed.

According to an alternative embodiment of the method for manufacturing shoe soles, the crushing phase includes an initial peeling phase, through which a mechanical separation of the felt components from the rubber is achieved.

According to one possible embodiment, the mechanical separation phase of the felt from the rubber is carried out through a surface peeling process using at least one metal blade, preferably a plurality of metal blades, which act on the outer surface of the tennis and/or padel balls.

According to an alternative embodiment, the mechanical separation phase is performed through a surface abrasion process of the felt using abrasive metal rollers, rotating metal brushes, or rotating abrasive cylinders.

Again, according to an alternative embodiment, the surface peeling is carried out through a water jet cutting process. The use of water moistens the ball before it is subjected to the crushing phases, thus reducing any potential fire risk.

According to a further alternative embodiment, the surface peeling is performed through an air jet cutting process.

Optionally, in the case of surface peeling or surface abrasion, the method includes a washing phase for the balls, for example, by immersion in dedicated tanks or by controlled spraying of water against the tennis balls themselves, in order to moisten the felt and reduce the risk of fire, as felt is known to be a flammable material.

After the felt has been removed from the tennis ball, the rubber layer, previously covered by felt, is then cut and shredded in a manner similar to that previously described in relation to the crushing phase.

The method then includes a pulverization phase, through which at least a portion of the rubber fragments obtained from the previous crushing phase are pulverized.

Optionally, in addition to the rubber fragments, it is possible to proceed with the pulverization of the felt fragments obtained during the crushing phase.

The size of the rubber and felt fragments can be further reduced through a pulverization process, also known as micronization, either together or separately.

The term "pulverization" (or "micronization") refers to a phase that allows for the further reduction of the size of the fragments obtained from the previous crushing phase.

For illustrative purposes, pulverization (also known as micronization) can reduce the fragments to sizes as small as approximately **100** µm, using specialized grinding wheels.

The rubber and felt fragments can be pulverized (micronized) either together or separately.

Optionally, the method for manufacturing soles according to the invention may include a devulcanization phase for at least part of the rubber fragments.

The devulcanization phase involves a physical-chemical treatment of the fragments, which can take place at the end of the crushing and/or pulverization phase, to return the rubber to a state prior to vulcanization.

As is known, the rubber in tennis and/or padel balls is a compound containing rubber and additional components. The final technical characteristics, such as elasticity, abrasion resistance, and tear resistance, are achieved following a vulcanization process.

The vulcanization process involves introducing a predetermined amount of sulfur into the compound and then subjecting the product to temperatures typically ranging from 130°-140° to 180°.

At the end of the devulcanization phase, the recycled material, in addition to rubber, includes additional components that are typically used to create the rubber compound for tennis and/or padel balls.

The presence of these additional components prevents the exclusive reuse of devulcanized recycled rubber for the manufacture of shoe soles, still requiring the use of virgin raw material to which the recycled material is added.

The method for manufacturing soles includes producing a compound, which forms the matrix, into which the recycled material is embedded.

Preferably, the recycled material added to the compound includes fragments of tennis and/or padel balls as they have been cut, and possibly sieved or screened and/or pulverized.

As previously described, the recycled material includes inert fragments, as well as, if necessary, devulcanized fragments and/or powder.

As mentioned earlier, one purpose of the present invention is to produce shoe soles that can be used in competitive sports activities, and therefore exhibit high mechanical properties.

The method for manufacturing a sole according to the invention, following the preparation of a rubber-based compound, that is, virgin raw material, of non-recycled type, includes a phase of introducing the recycled material obtained from tennis and/or padel balls.

According to a preferred embodiment, the percentage of tennis or padel ball fragments added to the rubber compound, including inert recycled material and devulcanized recycled material, ranges from 3% to 70%.

According to one embodiment of the invention, for manufacturing shoe soles, up to 50% by weight of devulcanized recycled material can be added to the rubber-based compound obtained from virgin raw material. **In** particular, this percentage is preferably achievable in cases where the use of non-devulcanized recycled material is not planned.

**If,** in the rubber-based compound obtained from virgin raw material, in addition to devulcanized recycled material, inert recycled material is also added, it is preferable to use a reduced percentage of devulcanized material, for example up to 40%. However, it should be understood that it is still possible to include up to 50% of devulcanized recycled material, to which a percentage of non-devulcanized recycled material can then be added.

The use of devulcanized recycled material allows for the production of a sole with characteristics comparable to those of a sole made from a rubber compound derived from virgin raw material, that is, without any recycled material.

The following table provides, by way of example, some comparative data between a shoe sole made from a non-recycled rubber compound and those of a shoe sole containing 30% devulcanized recycled material within the non-recycled rubber compound.

| | **Rubber compound** | **Rubber compound with 30% devulcanized recycled material** |
|---|---|---|
| Abrasion resistance | Max 120 shA | Max 130 shA |
| Tear resistance | 58 N/mm | 48 N/mm |
| Elongation | 500% | 450% |
| Density | 1,16 g/cm³ | 1,14 g/cm³ |

The method for manufacturing shoe soles according to the invention includes a phase of adding finely ground recycled material, such as pulverized, non-devulcanized or inert material, to the rubber compound.

As previously described, the use of devulcanized recycled rubber and non-devulcanized recycled rubber, both derived from tennis and/or padel balls, allows for an increased overall percentage of recycled material in the production of a shoe sole.

The combined use of devulcanized recycled material and non-devulcanized recycled material ensures high performance for the shoe sole, without compromising its characteristics and performance compared to traditional solutions, which instead rely solely on a rubber compound without recycled material or, possibly, on a rubber compound containing only inert recycled material.

Hereinafter, to distinguish between recycled material obtained from tennis and/or padel balls, such as devulcanized recycled rubber or non-devulcanized recycled rubber, the latter will be referred to as "inert recycled rubber".

Unlike recycled rubber that has been devulcanized, non-devulcanized recycled rubber cannot react with sulfur and other components present in the rubber mixture, effectively rendering it "inert" to them.

As an indicative but not limiting example, the method according to the invention, which involves the use of both devulcanized recycled rubber and inert recycled rubber, both to be added to the rubber mixture (compound), allows for the inclusion of up to 70% recycled material.

For instance, according to one embodiment of the method described in the invention, the total amount of recycled material to be added to the virgin material compound can include up to approximately 50% devulcanized recycled material and up to approximately 20% non-devulcanized recycled material. **In** an alternative embodiment, the method includes adding up to approximately 40% devulcanized recycled material and up to 10% non-devulcanized recycled material to the virgin compound.

The use of devulcanized recycled rubber allows for a greater overall percentage of recycled material to be added to the rubber compound without negatively affecting the sole's properties, particularly in terms of abrasion resistance, elongation, or density.

**In** this regard, it is noted that a possible decline in the characteristics of a shoe sole manufactured according to the invention, typically on the order of up to 20% compared to a similar sole made from a rubber compound derived exclusively from virgin material (i.e., without recycled material), is considered acceptable, as it is unlikely to be perceptible without the use of specific measurement instruments.

Depending on the intended use of the sole being produced, the percentage of tennis ball fragments may vary from the range indicated above.

As a purely illustrative but not limiting example, the percentage may range from 1% to 10% if the sole is intended for high-performance use, such as in high-intensity competitive sports activities; from 1% to 15% if the sole is intended to provide good performance, for instance, for medium or low-intensity sports activities, such as amateur sports; or from 1% to 25% if the sole is intended to provide standard performance suitable for everyday use, such as for casual walking.

The method then includes a mixing and agitation phase to promote the distribution and dispersion of the recycled material within the compound.

During this mixing phase, the rubber compound is maintained within a temperature range of approximately **110°** to 170°, more preferably between 130° and 150°, for a time interval of 5 to 15 minutes, preferably between 5 and 10 minutes, to allow the tennis ball fragments to blend with the compound itself and facilitate their subsequent mutual bonding during the sole forming process.

Following the mixing phase, the forming phase takes place in a mold, according to a methodology familiar to those skilled in the art and therefore not described in detail here.

As is known, mold forming, depending on the technology used, involves pouring or injecting the compound, in which the fragments are dispersed, into a cavity that replicates the shape of the sole.

According to one aspect of the method for manufacturing a sole, the mold forming process is carried out at a temperature within the range of 150° to 200°, more preferably between 160° and 180°, for a time interval of 5 to 15 minutes, preferably between 5 and 10 minutes.

During the molding phase, it is known to perform degassing steps to allow the air generated within the molds to escape, preventing it from becoming trapped within the compound and causing undesirable bubble or cavity formation within the sole itself.

It is considered that the mold forming phases for a shoe sole are within the reach of the person skilled in the art and therefore will not be described further.

An alternative embodiment of the method for manufacturing soles according to the invention involves using an EVA (ethylene-vinyl acetate) or polyurethane compound instead of a rubber compound, to which recycled material obtained from tennis and/or padel balls can be added.

Due to the use of an EVA or polyurethane compound, the recycled material cannot contain material from tennis and/or padel balls that have been subjected to a devulcanization process.

As is known, EVA and polyurethane soles are always expanded, meaning that within the mold or immediately after the mold is opened, an expansion phase occurs, making the product larger than its original dimensions, thus resulting in sizes greater than those of the mold itself.

This expansion is controlled by the use of an expanding agent incorporated into the compound, allowing for an expansion range from as little as 1% up to a maximum of 50%.

EVA and polyurethane products must be vulcanized.

The vulcanization process to which they are subjected, although involving similar temperatures to those previously mentioned in relation to the vulcanization of a rubber compound (typically between 130° and 170°), requires the addition of peroxides instead of sulfur, which is instead used in rubber.

Peroxides and sulfur are incompatible with each other and, therefore, prevent the incorporation of recycled material from tennis and/or padel balls that have undergone a devulcanization process into EVA or polyurethane compounds.

Within the devulcanized fragments, sulfur would still be present, which would become reactive again, potentially interfering with the peroxide.

For this reason, the method according to the invention, which includes the phase of providing an EVA or polyurethane compound, involves adding recycled material obtained from the fragmentation of tennis and/or padel balls, specifically inert material. This means the recycled material is obtained simply through mechanical fragmentation and subsequent pulverization, without any devulcanization process.

The powder or fragments obtained in this manner are inert and can be incorporated into EVA or polyurethane compounds.

The method according to the invention then includes the peroxide vulcanization phase, accompanied by the simultaneous expansion of the sole as it exits the mold.

The expansion phase involves the introduction of air into the compound, thereby reducing the density and weight of the sole.

When inert materials like powder or ball fragments are included, the method also includes a phase of selecting fragments with a maximum size of 1mm to 4mm, preferably between 1mm and 2mm.

Using recycled material fragments larger than this range could lead to the formation of excessively large air bubbles around these fragments. Excessively large air bubbles, in turn, could lead to dangerous issues, such as localized collapse of the sole's support structure at the site of the bubble or the initiation of tearing within the sole itself.

From the above, it is evident that the method for manufacturing shoe soles incorporating recycled material from tennis and/or padel balls effectively achieves the intended goals.

The production method described in the invention allows for the manufacture of high-performance shoe soles through the complete recycling of exhausted tennis and/or padel balls, meaning both their rubber portion and their external felt covering.

Additionally, the production method according to the invention incorporates a significantly higher percentage of recycled material compared to traditional methods, allowing for up to 70% recycled material, preferably up to 50%.

This characteristic has the dual benefit of reducing the environmental impact associated with exhausted tennis and/or padel balls and lowering production costs.

Recycled material, in fact, has a lower acquisition cost compared to the virgin raw materials typically used in the compounds for manufacturing shoe soles.

The above description outlines the preferred embodiments and provides suggestions for variations of the present invention. However, it should be understood that those skilled in the art may introduce modifications and changes without departing from the corresponding scope of protection, as defined by the appended claims.

It is also noted that the method for manufacturing soles according to the invention has been described in relation to soles for both traditional and sports footwear, but it is understood that the method can also be used for the production of soles for other types of footwear, such as work boots or mountain footwear.

## Claims

1. Method for the manufacture of shoe soles, comprising the steps of:
recovering exhausted tennis and/or padel balls, each comprising an external portion in felt and an internal portion in rubber;
fragmenting said exhausted tennis and/or padel balls, reducing them into fragments or granules of predetermined sizes;
separating rubber fragments from felt fragments obtained from said fragmenting step, wherein said separating includes at least one aeraulic separation cycle;
pulverizing at least a portion of said rubber fragments and/or said felt fragments to further reduce the size of said fragments;
selecting those among said fragments that have a predetermined size;
providing a compound made from virgin raw materials;
adding said fragments from said exhausted tennis and/or padel balls into said compound;
mixing said compound containing said fragments from tennis and/or padel balls;
molding at least one shoe sole in at least one mold;
extracting said at least one shoe sole from said at least one mold.

2. Method for the manufacture of shoe soles according to claim **1,** wherein said fragmenting step of said tennis and/or padel balls includes at least two fragmentation cycles, performed in succession, wherein each of said fragmentation cycles includes cutting said tennis and/or padel balls into fragments of predetermined sizes.

3. Method for the manufacture of shoe soles according to claim **1,** wherein said fragmenting step of said tennis balls includes at least one cutting phase of said tennis and/or padel balls, wherein said cutting is blade cutting and/or water cutting and/or air cutting.

4. Method for the manufacture of shoe soles according to claim **1,** wherein said aeraulic separation is performed at the end of said fragmenting step or, if said fragmenting step includes more than one fragmentation phase, at the end of each of said fragmentation phases or at the end of all said fragmentation phases.

5. Method for the manufacture of shoe soles according to claim **1,** wherein said pulverizing step of said rubber fragments and/or said felt fragments obtained from said fragmenting step allows for obtaining fragments with sizes up to 100 µm.

6. Method for the manufacture of shoe soles according to any of the preceding claims, further comprising a devulcanization step of at least a portion of said rubber fragments obtained through said fragmenting step.

7. Method for the manufacture of shoe soles according to claim 6, wherein said compound is a rubber compound, and wherein said mixing step includes adding to said rubber compound up to 50% by weight of recycled material obtained from said tennis and/or padel balls of the devulcanized type, and up to 20% by weight of recycled material obtained from said tennis and/or padel balls of the non-devulcanized or inert type.

8. Method for the manufacture of shoe soles according to claim 6, wherein said compound is a rubber compound, and wherein said mixing step includes adding to said rubber compound up to 50% by weight of recycled material obtained from said tennis and/or padel balls of the devulcanized type.

9. Method for the manufacture of shoe soles according to claim **1,** wherein said providing step of a compound includes providing an EVA or polyurethane compound.

10. Method for the manufacture of shoe soles according to claim 9, wherein said step of adding said fragments from tennis and/or padel balls into said compound includes adding fragments of the inert type that have not been subjected to a devulcanization process.
